# EUROPEAN PATENT APPLICATION

(11) **EP 4 821 813 A1**
(43) Date of publication of application: **14.10.2026**
(21) Application number: 26162615.4
(22) Date of filing: 05.03.2026
(51) Int. Cl.: B64D 11/00, G06V 20/59

(54) **SPATIAL MONITORING SYSTEM FOR OPTIMIZING AIRCRAFT LOADING**

(30) Priority: 10.04.2025 US 202519175137
(71) Applicant: The Boeing Company, Arlington, VA 22202 (US)
(72) Inventor: SIEBEN, Nathan W., BOTHELL, 98011 (US); HILLER, Nathan D., IRVINE, 92602 (US)
(74) Representative: Plasseraud IP

(57) **Abstract**

A method for aircraft (1110, 1202) management. Image data (1132) is received for areas of an aircraft (1110, 1202) that include deployment zones (1102) for overhead bins (151, 1101) in the aircraft (1110, 1202). The deployment zones (1102) are physical volumes that each overhead bin (1104, 1221, 1222, 1223, 1224) moves through and occupies as the overhead bin (1104, 1221, 1222, 1223, 1224) is opened. At least one of an opening or a closing of the overhead bins (151, 1101) is identified using the image data (1132) to form overhead bin usage data (1171). The overhead bin usage data (1171) is stored in a data collection (1134). The data collection (1134) is analyzed to determine a number of actions (1126) to perform for the aircraft (1110, 1202).

## Description

### BACKGROUND INFORMATION

### 1. Field:

The present disclosure relates generally to aircraft, and in particular to spatial monitoring in aircraft.

### 2. Background:

Overhead bins are present in the passenger cabin. These bands can be used for storing carry-on luggage can items. Further, overhead bins are used to prevent these items from becoming hazards during turbulence or other situations. The use of overhead bins can also increase boarding and deplaning efficiency as compared to having checked bags.

The flight deck of a commercial airplane is designed to provide an ergonomic and secure work area for pilots and other flight crew that may be stationed in the flight deck. Space is tight within flight deck. The seats in the flight deck are adjustable and mounted on rails. In some cases, a pilot seat may obstruct or partially obstruct the movement of the flight deck door when this door is opened. As a result, a seat in the flight deck may need to be moved or adjusted to allow for ease of movement in opening the flight deck door to allow a pilot or other crew member to enter or exit.

### SUMMARY

An embodiment of the present disclosure provides an aircraft management system as defined in pending claims.

Another embodiment of the present disclosure provides a method for aircraft management as defined in pending claims. Image data is received from a camera system in an aircraft. The image data is for areas of the aircraft that include deployment zones for overhead bins in the aircraft. The deployment zones are physical volumes that each overhead bin moves through and occupies as the overhead bin is opened. A determination is made as to whether a number of open overhead bins are present in the deployment zones using the image data. An indication of the number of open overhead bins is generated in response to the number of overhead bins being open during a phase of flight in which the overhead bins are to be closed.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a cutaway view of an aircraft in accordance with an illustrative embodiment;
**Figure 2** is an illustration of a block diagram of an aircraft environment in accordance with an illustrative embodiment;
**Figure 3** is an illustration of a flight deck of an aircraft containing a swing zone in accordance with an illustrative environment;
**Figure 4** is an illustration of a flight deck of an aircraft containing a swing zone and a visual feature in accordance with an illustrative environment;
**Figure 5** is another illustration of a flight deck of an aircraft containing a swing zone and a visual feature in accordance with an illustrative environment;
**Figure 6** is an illustration of a sensor system for generating image data of an area containing a swing zone in accordance with an illustrative embodiment;
**Figure 7** is an illustration of a flowchart of a process for providing an autonomous warning in accordance with an illustrative embodiment;
**Figure 8** is an illustration of a flowchart of a process for providing an autonomous warning in accordance with an illustrative embodiment;
**Figure 9** is an illustration of a flowchart of a process for providing an autonomous warning in accordance with an illustrative embodiment;
**Figure 10** is an illustration of a flowchart of a process for generating an autonomous warning in accordance with an illustrative embodiment;
**Figure 11** is an illustration of a block diagram of an overhead bin management system in accordance with an illustrative embodiment;
**Figure 12** is an illustration of a passenger cabin with an overhead bin in accordance with an illustrative embodiment;
**Figure 13** is an illustration of a flowchart of a process for providing an autonomous warning in accordance with an illustrative embodiment;
**Figure 14** is an illustration of a flowchart of a process for aircraft management in accordance with an illustrative embodiment;
**Figure 15** is an illustration of a block diagram of a data processing system in accordance with an illustrative embodiment;
**Figure 16** is an illustration of a block diagram of an aircraft manufacturing and service method in accordance with an illustrative embodiment; and
**Figure 17** is an illustration of a block diagram of an aircraft in which an illustrative embodiment may be implemented.

### DETAILED DESCRIPTION

The illustrative embodiments recognize and take into account one or more different considerations as described herein. Overhead bins should be opened or closed during different phases of flight of aircraft. For example, prior to boarding and may be desirable to have overhead bins in an open position to increase the speed and efficiency at which passengers place carry-on items in these bins and reach their seats. Additionally, overhead bin should be closed prior to certain phases of flight such as taxi-out or a final approach.

Currently, the flight crew can check to ensure that overhead bins are open or closed during the appropriate phases of flight. Further, the flight can also identify cases in which overhead bins may not be used because they do not operate properly and requirements. These types of determination can be time-consuming and sometimes inaccurate when relying on the flight crew to perform these operations.

Also, pilots can be at risk of injury during sudden decompression events onboard commercial aircraft. Air pressure differentials can result in a flight deck door rapidly opening. The sweep of a door defines a swing zone area for a door in an aircraft that may need to rapidly open in response to a decompression event.

For example, a flight deck seat may be adjusted or moved such that a portion of the flight deck seat is within the swing zone. As a result, the pilot or other crew member in the flight deck seat may be in the sweep path of the flight deck door. A sudden opening of the flight deck door can potentially cause physical injury to a pilot or other crew member sitting in the flight deck seat that is positioned in this area that obstructs opening of the flight deck door.

Thus, it would be desirable to know whether an overhead bin is open or closed or whether a seat is positioned within a swing zone in case a decompression event occurs. Sensors such as displacement sensors can be added to overhead bins or the flight deck seats. Sensors can be added to each of the degrees of freedom to determine the overall movement of the flight deck seat. This type of sensor system can be used to determine when flight deck seats are positioned or moved to occupy the swing zone of the flight deck door.

Adding sensor systems to overhead bins or seats, however, are costly to design, install, and maintain. Also, these additional safety systems add to the weight to the aircraft.

Thus, the illustrative examples can use sensors already present in the aircraft. For example, a camera system in the aircraft can be used to detect the position of overhead bins or other objects such as seats and determine whether those seats are in swing zones for doors in the aircraft. Further, additional cameras in a camera system can be made at a much lower cost as compared to designing and implementing sensors for the flight deck seat.

In one example, an aircraft management system comprising a computer system; and a bin analyzer in the computer system. The bin analyzer performs operations. The bin analyzer receives image data from a camera system in an aircraft. The image data is for areas of the aircraft that include deployment zones for overhead bins in the aircraft. The deployment zones are physical volumes that each overhead bin moves through and occupies as the overhead bin is opened. The bin analyzer identifies at least one of an opening or a closing of the overhead bins using the image data to form overhead bin usage data. The bin analyzer stores the overhead bin usage data in a data collection. The bin analyzer analyzes the data collection to determine a number of actions to perform for the aircraft.

December actions can include, for example, indicating which overhead bins are open when they should be closed or overhead bins that are closed when they should be opened. Further, the actions can also include determining boarding and deporting procedures for passengers.

In another example, an autonomous aircraft warning system comprises a camera system in an aircraft; a swing zone in the flight deck; a computer system; and an object detector. The swing zone in the flight deck is defined by a sweep path within the flight deck for a flight deck door. The object detector is located in the computer system. The object detector forms operations. For example, the object detector receives image data from the camera system, wherein the image data is for the flight deck of the aircraft that includes the swing zone. The object detector determines whether an object is in the swing zone using the image data. The object detector generates an autonomous warning in response to the object being in the swing zone.

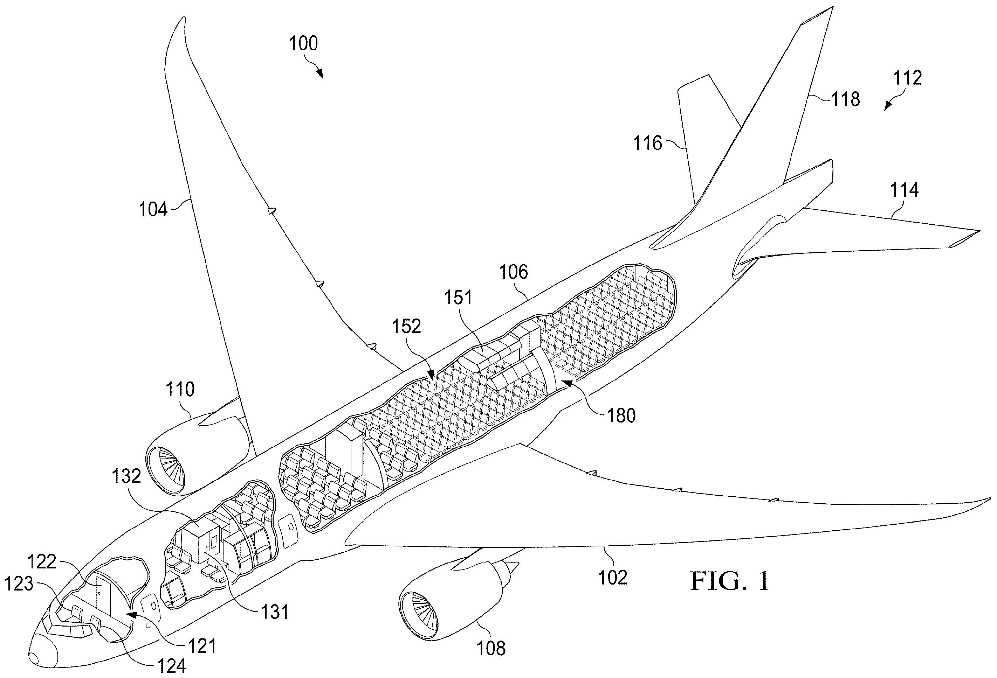

With reference now to the figures, and in particular, with reference to **Figure 1****,** an illustration of a cutaway view of an aircraft is depicted in accordance with an illustrative embodiment. In this illustrative example, commercial airplane **100** has wing **102** and wing **104** attached to body **106.** Commercial airplane **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

As depicted, cutaways are present in this view of commercial airplane **100** to enable viewing interior portions of commercial airplane **100.** For example, flight deck **121** can be seen in commercial airplane **100.** In this view of flight deck **121,** flight deck door **122** is a location where a pilot, copilot, and other crew members can enter or exit flight deck **121.** Also seen in this view are flight deck seat **123** and flight deck seat **124** used by a copilot and pilot, respectively.

In the different illustrative examples, an autonomous flight deck warning system can be implemented to generate a warning when the flight deck seat, such as flight deck seat **124,** is in a position that obstructs opening the flight deck door **122.** For example, flight deck seat **124** may be moved or leaned back such that flight deck seat **124** obstructs at least one of opening or closing of flight deck door **122.**

The phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

In this example, the detection of the obstruction of flight deck door **122** can be made using image data generated by one or more cameras in the camera system for interior **180** of commercial airplane **100.** These images are processed to determine whether flight deck seat **124** obstructs a swing zone for flight deck door **122.** A swing zone is defined by a sweep path that flight deck door **122** makes as flight deck door **122** is moved to open or close flight deck door **122.**

This warning can be provided such that flight deck seat **124** can be moved to a position that does not obstruct the opening of flight deck door **122.** This warning reduces undesired results in the event that a decompression event occurs resulting in flight deck door **122** swinging open while an object obstructs movement of flight deck door **122.** Contact with this obstruction may be made by flight deck door **122** as it swings open. In this case, undesired effects may occur if the object is a pilot in flight deck seat **124.**

In another illustrative example, the autonomous flight deck door monitoring system can be extended to function as a general door warning system. With this example, warnings can also be provided for other doors within interior **180** of commercial airplane **100.** These warnings can be generated when other doors within interior **180** of commercial airplane **100** are obstructed from at least one of opening or closing by one or more objects. The objects can be selected from at least one of a seat, a passenger, a cart, or other object. For example, the warning can be generated for door **131** of lavatory **132.**

In this example, the phrase "at least one of," when used with a list of items, means different combinations of one or more of the listed items can be used, and only one of each item in the list may be needed. In other words, "at least one of" means any combination of items and a number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

In yet another illustrative example, the camera system for interior **180** of commercial airplane **100** can also be used to gather usage data for overhead bins **151** within the passenger cabin **152.** For example, the camera system can generate image data for at least one of the opening and closing of overhead bins **151.** This camera system can also detect whether overhead bins remain open or closed. This image data can be used to determine the usage of overhead bins **151** as well as a pattern of usage in loading and unloading carry-on luggage and other objects from overhead bins **151.** With this data, maintenance of overhead bins, passenger boarding procedures, passenger deboarding procedures, and other processes relating to the use of overhead bins can be managed and adjusted.

The illustrations of commercial airplane **100** and interior **180** are provided as an illustration of one manner in which commercial airplane **100** can be implemented. Further, other components also are present but not shown because of the cutaways made to view interior **180** of commercial airplane **100.** For example, commercial airplane **100** has additional overhead bins in addition to overhead bins **151.** These other overhead bins are not shown to avoid obscuring the view of other components within passenger cabin **152.** For example, other components that can be seen more clearly without these other overhead bins are rows of passenger seats as well as aisles and other areas.

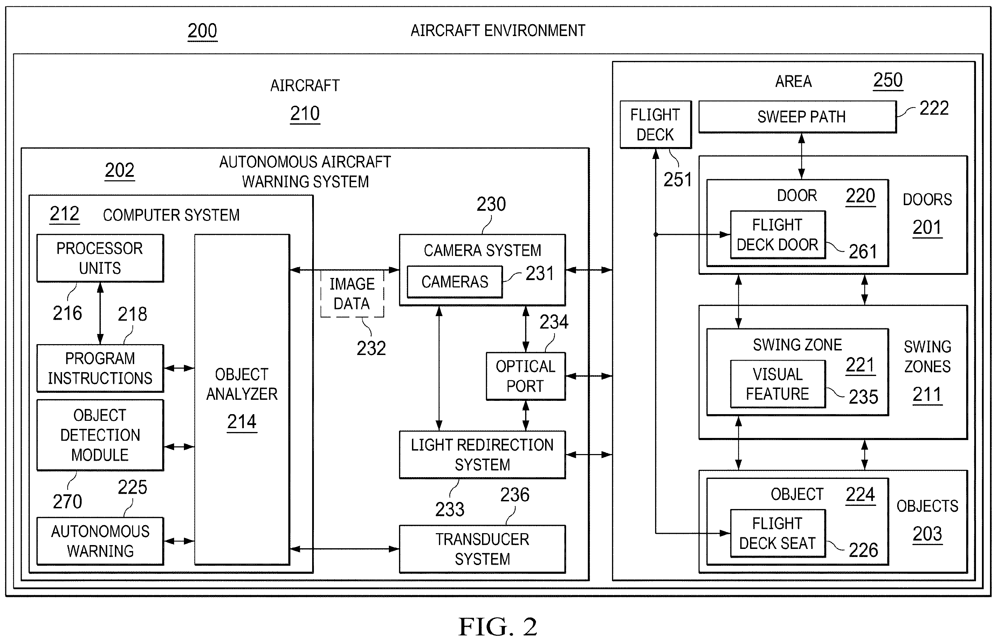

With reference now to **Figure 2****,** an illustration of a block diagram of an aircraft environment is depicted in accordance with an illustrative embodiment. In this illustrative example, aircraft environment **200** includes components that can be implemented in commercial airplane **100** in **Figure 1****.**

In this illustrative example, autonomous aircraft warning system **202** is used with aircraft **210** to automatically provide warnings of when doors **201** within aircraft **210** are obstructed by objects **203.** Commercial airplane **100** is an example of an implementation of an autonomous aircraft warning system **202.** Aircraft **210** can be selected from a group comprising a commercial airplane, a cargo airplane, a rotor aircraft, a tilt wing aircraft, a vertical takeoff and landing aircraft, a rotorcraft, an unmanned aerial vehicle, a drone, an artificial intelligence controlled drone, an electric vertical takeoff and landing vehicle, a personal air vehicle, a glider, and other types of aircraft that can fly in the atmosphere.

In this illustrative example, doors **201** can be obstructed when objects **203** are within swing zones **211** of doors **201.** For example, door **220** in doors **201** has swing zone **221** in swing zones **211.** Swing zone **221** is defined by sweep path **222** of door **220.** Sweep path **222** is the path door **220** moves on when opening or closing. This movement of door **220** moves through an area or volume that is swing zone **221.**

In this example, object **224** in objects **203** obstructs door **220** when door **220** is within swing zone **221** for door **220.** Object **224** can be selected from a group such as a seat, a flight deck seat, a pilot seat, a person, and other physical objects that may be found within the interior of aircraft **210.**

In this illustrative example, autonomous aircraft warning system **202** in aircraft **210** can monitor swing zones **211** to determine whether obstructions such as objects **203** are present within swing zones **211** and provide autonomous warning **225** when obstructions are detected in one of swing zones **211.** Autonomous aircraft warning system **202** comprises camera system **230,** computer system **212,** and object analyzer **214.**

Camera system **230** generates image data **232** using a number of cameras **231** located within the interior of aircraft **210.** This image data is selected from at least one of individual images or a video stream.

In some illustrative examples, other components in autonomous aircraft warning system **202** can be present in addition to camera system **230** to monitor swing zones **211** and area **250.** For example, the system can also include light redirection system **233,** optical port **234,** and other suitable components that can aid camera system **230** to monitor area **250.**

For example, light redirection system **233** can reflect light from swing zone **221** to camera system **230** such that the light received by camera system **230** matches an angle at which the light is received by light redirection system **233** to provide a clear image of the swing zone. Light redirection system **233** can include optical components selected from at least one of a mirror, a concave mirror, or a prism, or other suitable optical components that redirect light.

Optical port **234** can enable directing light from one portion of area **250** to another portion of area **250** through a structure such as a wall or door. For example, a camera may be present in the passenger area but not in flight deck **251.** With this example, optical port **234** can be designed and located such that light for swing zone **221** is received by camera system **230** through optical port **234** in a structure separating flight deck **251** from another portion of aircraft **210.** This light may be directed directly to the camera in camera system **230** or reflected using light redirection system **233.**

Object analyzer **214** can be implemented in software, hardware, firmware or a combination thereof. When software is used, the operations performed by object analyzer **214** can be implemented in program instructions configured to run on hardware, such as a processor unit. When firmware is used, the operations performed by object analyzer **214** can be implemented in program instructions and data and stored in persistent memory to run on a processor unit. When hardware is employed, the hardware can include circuits that operate to perform the operations in object analyzer **214.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

As used herein, "a number of" when used with reference to items, means one or more items. For example, "a number of operations" is one or more operations.

Computer system **212** is a physical hardware system and includes one or more data processing systems. When more than one data processing system is present in computer system **212,** those data processing systems are in communication with each other using a communications medium. The communications medium can be a network. The data processing systems can be selected from at least one of a computer, a server computer, a tablet computer, or some other suitable data processing system.

As depicted, computer system **212** includes a number of processor units **216** that are capable of executing program instructions **218** implementing processes in the illustrative examples. In other words, program instructions **218** are computer-readable program instructions.

As used herein, a processor unit in the number of processor units **216** is a hardware device and is comprised of hardware circuits such as those on an integrated circuit that respond to and process instructions and program code that operate a computer.

When the number of processor units **216** executes program instructions **218** for a process, the number of processor units **216** can be one or more processor units that are in the same computer or in different computers. In other words, the process can be distributed between processor units **216** on the same or different computers in computer system **212.**

Further, the number of processor units **216** can be of the same type or different types of processor units. For example, the number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In one illustrative example, one or more technical solutions are present that overcome a technical problem with objects within a swing zone of a door in an aircraft. As a result, one or more technical solutions may provide a technical effect providing warnings to avoid a door hitting an object.

Computer system **212** can be configured to perform at least one of the steps, operations, or actions described in the different illustrative examples using software, hardware, firmware or a combination thereof. As a result, computer system **212** operates as a special purpose computer system in which object analyzer **214** in computer system **212** enables generating autonomous warnings in response to detecting objects **203** in swing zones **211.** In particular, object analyzer **214** transforms computer system **212** into a special purpose computer system as compared to currently available general computer systems that do not have object analyzer **214.**

In this illustrative example, object analyzer **214** performs a number of different operations to monitor swing zones **211** in aircraft **210.** For example, object analyzer **214** receives image data **232** from camera system **230.** In this example, image data **232** is for area **250** of aircraft **210** that includes swing zone **221** defined by sweep path **222** of door **220** in aircraft **210.**

Object analyzer **214** determines whether object **224** is in swing zone **221** using image data **232.** In this example, object **224** is within swing zone **221** when at least a portion of object **224** is within swing zone **221.** In other words, all of object **224** does not need to be fully within swing zone **221** in these examples.

In the illustrative example, object analyzer **214** performs this analysis by using or implementing a number of different types of processes for software components. For example, object analyzer **214** can use object detection module **270** to determine whether object **224** is located in swing zone **221** using image data **232.** This object detection module can include at least one of a machine learning model, a convolutional neural network (CNN), a vision model, a segmentation model, a transformer-based vision model, or other suitable models that have been trained or designed to detect and localize objects.

Further in this illustrative example, assistance can be provided in detecting object **224** within swing zone **221** by including visual feature **235** in swing zone **221.** This visual feature can be selected to make detecting objects **203** within swing zone **221** easier. For example, object **224** within the swing zone obstructs at least a portion of the visual feature. In this illustrative example, visual feature **235** can be selected from at least one of a pattern, a label, a symbol, a color cue, a contour outline for the swing zone, or other type of feature or indicator increases the ability to detect object **224** within swing zone **221.**

Object analyzer **214** generates autonomous warning **225** in response to object **224** being within swing zone **221.** This warning is generated in a manner to catch the attention of crewmembers such as a pilot, a copilot, a flight engineer, a flight attendant, or other crewmembers that may be present on aircraft **210.**

Object analyzer **214** can generate autonomous warning **225** using transducer system **236** in aircraft **210.** With transducer system **236,** object analyzer **214** generates autonomous warning **225** by activating transducer system **236** in response to object **224** being within swing zone **221.**

This type of warning can be useful for different events that may occur with respect to aircraft **210.** In one example, area **250** can be flight deck **251** in aircraft **210,** door **220** is flight deck door **261,** and object **224** is flight deck seat **226.** With this example, generating autonomous warning **225** can be useful in the event of a decompression event. In response to being activated to generate autonomous warning **225** by object analyzer **214,** transducer system **236** performs at least one of generating an acoustic signal, generating a graphical indicator, sending a text message, emitting a scent, or other suitable action.

With this type of event, flight deck door **261** can swing open quickly in response to this event. This autonomous warning can warn a crewmember, such as a pilot, to move or readjust the position flight deck seat **226** such that flight deck seat **226** is no longer within swing zone **221.** This type of adjustment may be useful when aircraft **210** is in a phase of flight in which a decompression event can occur.

This type of warning can also be useful in other types of events such as during food service. An autonomous warning of a cart in the swing zone of a door can be generated to alert a person who is on the other side of the door and cannot see the cart to avoid opening the door when the cart is present.

In the illustrative example, the use of object analyzer **214** in computer system **212** integrates processes into a practical application for providing autonomous warnings and responsive objects being within an undesired zone in aircraft. In other words, object analyzer **214** in computer system **212** is directed to a practical application of processes integrated into object analyzer **214** in computer system **212** that performs operations to detect objects in a swing zone. The detection of the object enables a practical application of generating an autonomous warning that an object is within the swing zone of a door. This autonomous warning can then be used in a practical application to move the object to avoid collision with the door in the event that the door is opened. This warning can be useful when a decompression event occurs causing the door to open quickly.

The illustration of aircraft environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, autonomous warning **225** can take a number of different forms other than those illustrated above. In one example, in generating autonomous warning **225,** object analyzer **214** generates a first autonomous warning in response to object **224** in swing zone **221** being flight deck seat **226.** With this example, object analyzer **214** generates a second autonomous warning in response to object **224** in swing zone **221** being a person.

As another example, object detection module **270** is shown as a separate component from object analyzer **214.** With this example, object analyzer **214** uses object detection module **270.** In other examples, object detection module **270** can be implemented as part of object analyzer **214.**

In yet another illustrative example, object analyzer **214** can be located outside of aircraft **210** in another location such as a ground station or airline center. With this example, image data **232** can be sent to object analyzer **214** at the remote location for analysis. In yet another illustrative example, object analyzer **214** can be a distributed component in which some components are located within aircraft **210** while other components are located in another location remote to aircraft **210.**

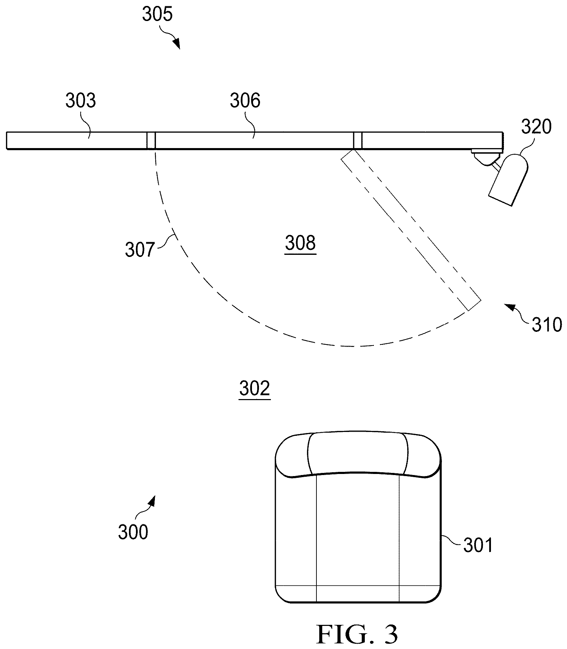

With reference now to **Figure 3****,** an illustration of a flight deck of an aircraft containing a swing zone is depicted in accordance with an illustrative environment. In this example, a portion of flight deck **300** is shown. Flight deck **300** is an example of flight deck **251** in **Figure 2****.**

In this example, flight deck seat **301** in flight deck **300** is an example of flight deck seat **226** in **Figure 2****.** This flight deck **300** sits on floor **302** in flight deck **300** and can be occupied by a crewmember such as a pilot or copilot. Wall **303** separates flight deck **300** from the passenger cabin **305.** Flight deck door **306** enables entry and exit from flight deck **300.**

In this example, flight deck door **306** can open and close by moving through sweep path **307.** This sweep path defines an area referred to as swing zone **308.** Camera **320** is an example of a camera in camera system **230 in** **Figure 2****.** As depicted, this camera is attached to wall **303** and generates image data for area **310** including swing zone **308.**

In this illustrative example, floor **302,** wall **303,** flight deck door **306,** and flight deck seat **301** are patterns in the image data generated by camera **320** that can be analyzed to determine whether flight deck seat **301** or some other object is within swing zone **308.**

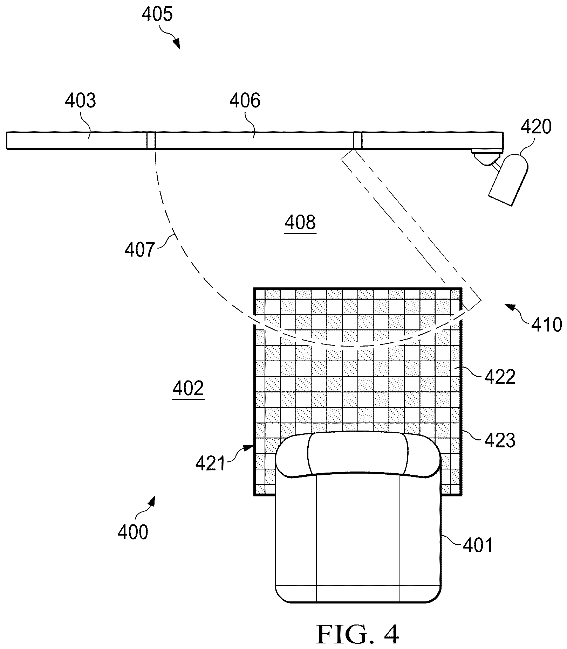

Next in **Figure 4****,** an illustration of a flight deck of an aircraft containing a swing zone and a visual feature is depicted in accordance with an illustrative environment. In this example, a portion of flight deck **400** is shown. Flight deck **400** is an example of flight deck **251** in **Figure 2****.**

Flight deck seat **401** in flight deck **400** is an example of flight deck seat **226** in **Figure 2****.** This flight deck seat sits on floor **402** in flight deck **400.** Wall **403** separates flight deck **400** from passenger cabin **405.** Flight deck door **406** enables entry and exit from flight deck **400.**

In this example, flight deck door **406** has sweep path **407.** This sweep path defines an area referred to as swing zone **408.** Camera **420** is an example of a camera in camera system **230** in **Figure 2****.** As depicted, this camera is attached to wall **403** and generates image data for area **410** including swing zone **408.**

In this example, visual feature **421** is located on floor **402.** Visual feature **421** comprises a checkered pattern **422** with outline **423.** In this example, visual feature **421** is within swing zone **408.** Visual feature **421** is within swing zone **408** with a portion of checkered pattern **422** and outline **423** being within swing zone **408.** In other words, all of visual feature **421** does not need to be within swing zone **408.** In this example, a portion of flight deck seat **401** is located within visual feature **421.** In some examples, flight deck seat **401** does not need to be within visual feature **421.**

Visual feature **421** provides additional patterning in the image data generated by camera **420** or analysis in determining whether flight deck seat **401** is within swing zone **408.** In this example, flight deck seat **401** is not positioned where the seat is located within swing zone **408.**

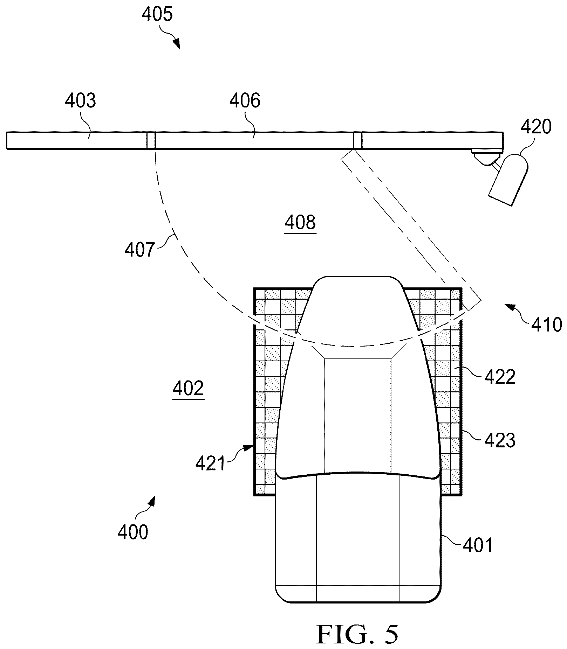

Turning to **Figure 5****,** another illustration of a flight deck of an aircraft containing a swing zone and a visual feature is depicted in accordance with an illustrative environment. In the illustrative examples, the same reference numeral may be used in more than one figure. This reuse of a reference numeral in different figures represents the same element in the different figures.

In this example, flight deck seat **401** has been repositioned. This repositioning of flight deck seat **401** results in flight deck seat **401** being within swing zone **408.**

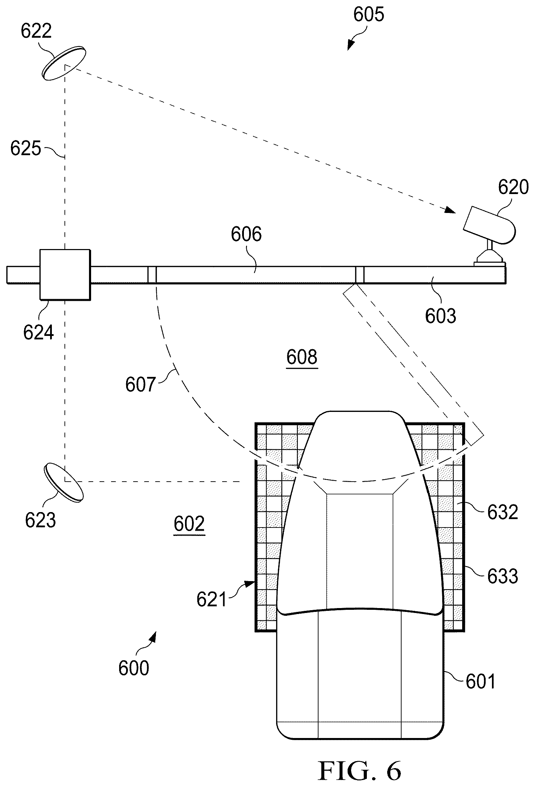

With reference next to **Figure 6****,** an illustration of a sensor system for generating image data of an area containing a swing zone is depicted in accordance with an illustrative embodiment. In this example, a portion of flight deck **600** is shown. Flight deck **600** is an example of flight deck **251** in **Figure 2****.**

Flight deck seat **601** in flight deck **600** is an example of flight deck seat **226** in **Figure 2****.** This flight deck seat sits on floor **602** in flight deck **600.** Wall **603** separates flight deck **600** from passenger cabin **605.** Flight deck door **606** enables movement into and out of flight deck **600.**

In this example, flight deck door **606** has sweep path **607.** This sweep path defines an area referred to as swing zone **608.** In this example, visual feature **621** is located on floor **602.** Visual feature **621** comprises checkered pattern **632** with outline **633.**

As depicted, camera **620** is attached to wall **603** and generates image data. However, camera **620** on the side of passenger cabin **605** can have a direct view of swing zone **608** in flight deck **600.** With this example, mirror **622,** mirror **623,** and optical port **624** are components in a light redirection system that can be used to provide light **625** from flight deck **600** including swing zone **608.** In this example, mirror **622** is located in passenger cabin **605** and mirror **623** is located in flight deck **600.** Optical port **624** is located in wall **603.**

The arrangement and positioning of these components is such that light **625** is reflected by mirror **623** through optical port **624.** This light is then reflected by mirror **622** to camera **620.** Thus, these components can provide camera **620** a view of flight deck **600** that includes swing zone **608,** enabling monitoring swing zone **608** for intrusion of objects such as flight deck seat **601.**

The illustration of flight decks in **Figures 3-6** have been provided as an example of one implementation for an area that can be monitored by an autonomous aircraft warning system. This illustration is not meant to limit the manner in which the different illustrative examples can be implemented. For example, monitoring can be performed for other areas such as in the passenger cabin where doors for a galley, a closet, a lavatory, or other area can be present. Further, the illustrative examples describe the swing zones as areas in two dimensions. In other examples, the swing zone can be a three-dimensional volume.

In yet another example, the monitoring of the swing zone in the flight deck can be performed for other objects in addition to the flight deck seats. For example, other objects can be detected including a cart, a crew member, or other object.

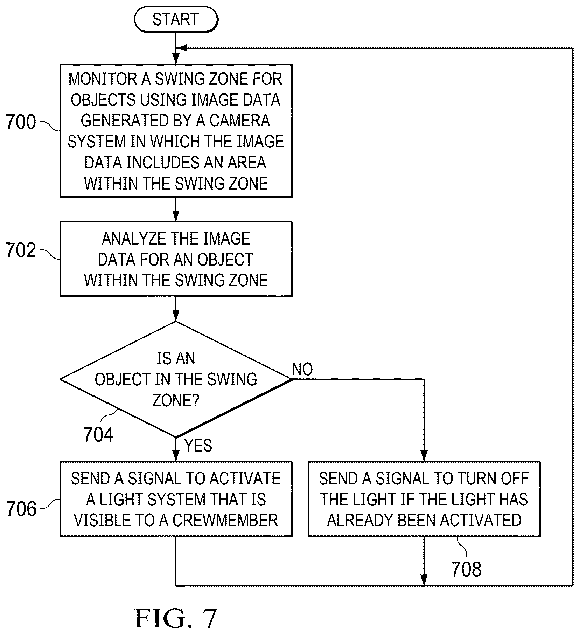

Turning next to **Figure 7****,** an illustration of a flowchart of a process for providing an autonomous warning is depicted in accordance with an illustrative embodiment. The process in **Figure 7** can be implemented in hardware, software, or both. When implemented in software, the process can take the form of program instructions that are run by one of more processor units located in one or more hardware devices in one or more computer systems. For example, the process can be implemented in object analyzer **214** in computer system **212** in **Figure 2****.**

The process monitors a swing zone for objects using image data generated by a camera system in which the image data includes an area within the swing zone (operation **700**). In this example, monitoring can include generating image data and can be at least one of individual images or a video stream.

The process analyzes the image data for an object within the swing zone (operation **702**). In operation **702,** the analysis can be made using a machine learning model, a visual analysis system, or other suitable components that can detect objects within the swing zone.

A determination is made as to whether an object is in the swing zone (operation **704**). If an object is in the swing zone, a signal is sent to activate a light system that is visible to a crewmember (operation **706**). This crew member can be, for example, a pilot, a copilot, or other crew member. The process then returns to operation **700.**

Turning back to operation **704,** if an object is not detected within the swing zone, the process sends a signal to turn off the light if the light has already been activated (operation **708**). The process then returns to operation **700.**

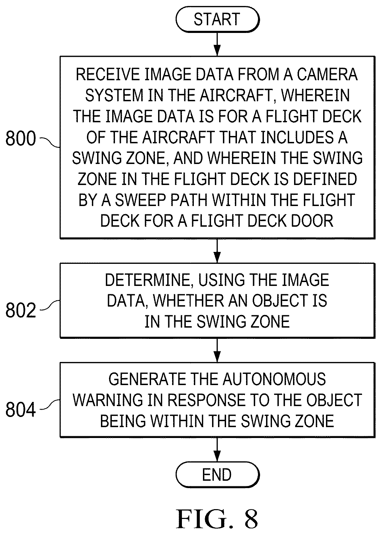

Turning next to **Figure 8****,** an illustration of a flowchart of a process for providing an autonomous warning is depicted in accordance with an illustrative embodiment. The process in **Figure 8** can be implemented in hardware, software, or both. When implemented in software, the process can take the form of program instructions that are run by one of more processor units located in one or more hardware devices in one or more computer systems. For example, the process can be implemented in object analyzer **214** in computer system **212** in **Figure 2****.**

The process receives image data from a camera system in the aircraft, wherein the image data is for a flight deck of the aircraft that includes a swing zone, and wherein the swing zone in the flight deck is defined by a sweep path within the flight deck for a flight deck door (operation **800**). The process determines, using the image data, whether an object is in the swing zone (operation **802**).

The process generates the autonomous warning in response to the object being within the swing zone (operation **804**). The process terminates thereafter.

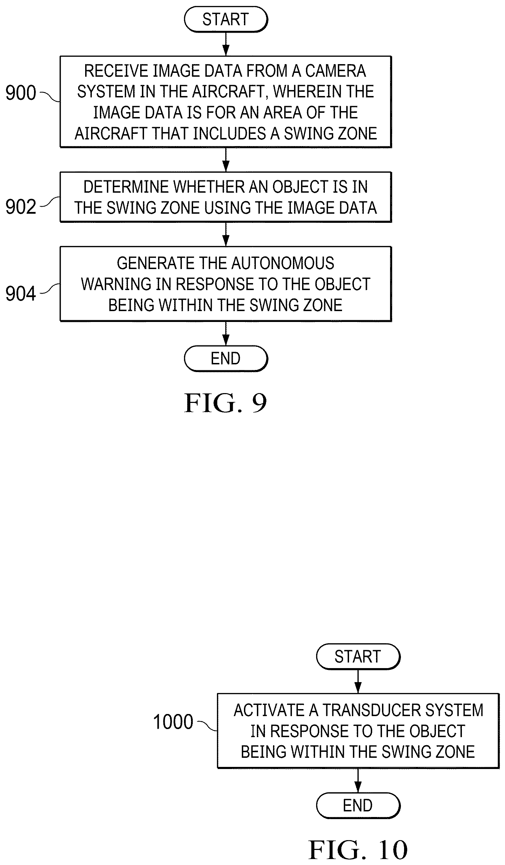

Turning next to **Figure 9****,** an illustration of a flowchart of a process for providing an autonomous warning is depicted in accordance with an illustrative embodiment. The process in **Figure 9** can be implemented in hardware, software, or both. When implemented in software, the process can take the form of program instructions that are run by one of more processor units located in one or more hardware devices in one or more computer systems. For example, the process can be implemented in object analyzer **214** in computer system **212** in **Figure 2****.**

The process receives image data from a camera system in the aircraft, wherein the image data is for an area of the aircraft that includes a swing zone (operation **900**). The process determines whether an object is in the swing zone using the image data (operation **902**).

The process generates the autonomous warning in response to the object being within the swing zone (operation **904**). The process terminates thereafter.

Next in **Figure 10****,** an illustration of a flowchart of a process for generating an autonomous warning is depicted in accordance with an illustrative embodiment. This operation is an example of an implementation for operation **804** in **Figure 9****.**

The process activates a transducer system in response to the object being within the swing zone (operation **1000**). The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

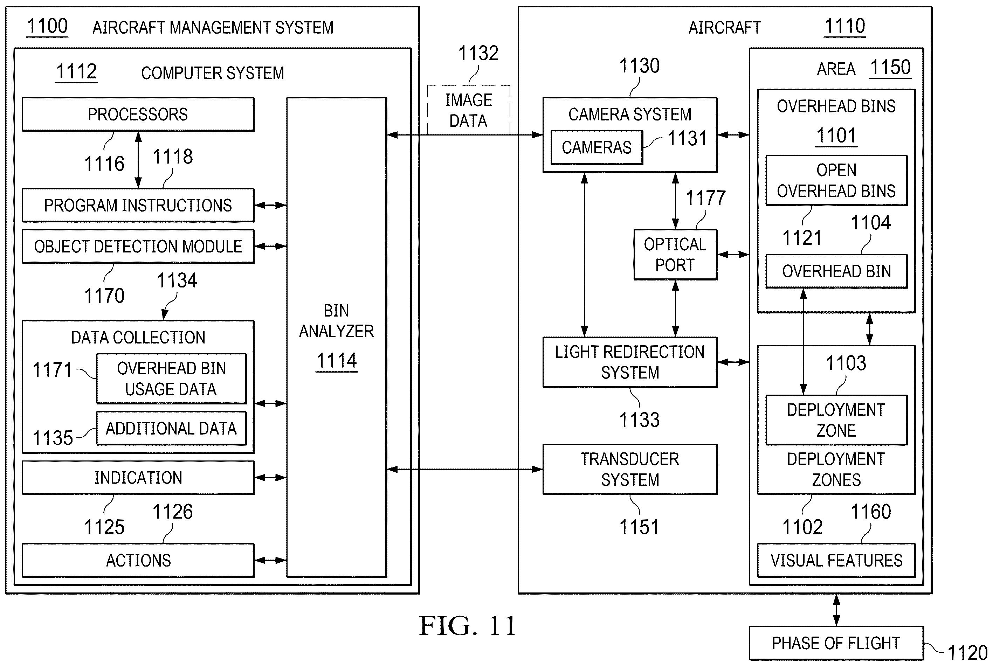

Turning now to **Figure 11****,** an illustration of a block diagram of an overhead bin management system is depicted in accordance with an illustrative embodiment. In this illustrative example, aircraft management system **1100** can operate to monitor usage of overhead bins **1101** in aircraft **1110.** The data collected from monitoring usage can be used to perform a number of different operations for aircraft **1110** as well as other aircraft. In this example, commercial airplane **100** in **Figure 1** is an example of aircraft **1110.** Aircraft **1110** can be any type of aircraft that carries passengers and has overhead bins.

In this illustrative example, aircraft management system **1100** comprises computer system **1112** and bin analyzer **1114** in computer system **1112.**

Bin analyzer **1114** can be implemented in software, hardware, firmware or a combination thereof. When software is used, the operations performed by bin analyzer **1114** can be implemented in program instructions configured to run on hardware, such as a processor unit. When firmware is used, the operations performed by bin analyzer **1114** can be implemented in program instructions and data and stored in persistent memory to run on a processor unit. When hardware is employed, the hardware can include circuits that operate to perform the operations in bin analyzer **1114.** In one example, bin analyzer **1114** can be implemented using program instructions **1118** that are run by a number of processors **1116** in computer system **1112.**

In this illustrative example, monitoring can be performed using camera system **1130** in aircraft **1110.** In this example, camera system **1130** generates image data **1132** using a number of cameras **1131** and transmits image data 1132 to the bin analyzer 1114. This image data can be at least one of individual images or a video stream.

With this example, deployment zones **1102** are present in aircraft **1110.** For example, deployment zone **1102** is defined by a path on which overhead bin **1101** moves as overhead bin **1101** is moved to open or close.

Bin analyzer **1114** receives image data **1132** from camera system **1130.** In this example, image data **1132** is for area **1150** of aircraft **1110** that includes deployment zones **1102.** Bin analyzer **1114** determines whether a number of open overhead bins **1121** are present in deployment zones **1102** using the image data **1132.**

Object analyzer **1114** can use object detection module **1170** to determine whether overhead bin **1101** is located in deployment zone **1102** using image data **1132.** An overhead bin can be an open overhead bin if the overhead bin is partially or fully open.

This object detection module 1170 can include at least one of a machine learning model, a convolutional neural network (CNN), a vision model, a segmentation model, a transformer-based vision model, or other suitable models that have been trained or designed to detect and localize objects.

In one example, additional components are present to aid in generating image data **1132** of deployment zones **1102** in area **1150.** For example, light redirection system **1133** and optical port **1177** are present within aircraft **1110.**

For example, light redirection system **1133** is configured to reflect light from a number of the deployment zones **1102** in which the light is redirected to camera system **1130** such that an angle of the light received by camera system **1130** matches the angle at which the light is received by light redirection system **1133** to provide a clear image of a number of deployment zones **1102.** Light redirection system **1133** can include at least one of a mirror, a concave mirror, a prism, or other suitable redirection device.

In another example, with optical port **1177,** light from a number of deployment zones **1102** is received by camera system **1130** through optical port **1177** in a structure separating one area of aircraft **1110** from another area of the aircraft **1110.**

Also, a number of visual features **1160** can be located in deployment zones **1102.** With this example, an overhead bin in an open position obstructs at least a portion of the number of visual features **1160.** The number of visual features **1160** is selected from at least one of a pattern, a label, a symbol, a color cue, a contour outline for the deployment zone, or other type of visual feature.

Further in this example, bin analyzer **1114** can identify at least one of opening or closing of overhead bins **1101** using image data **1132** to form overhead bin usage data **1171.** Image data **1132** can be selected from at least one of individual images or a video stream.

Bin analyzer **1114** can store overhead bin usage data **1171** in data collection **1134.** This data collection can be at least one of a database, a spreadsheet, files in a folder, and other types of data structures and organizations.

In this example, bin analyzer **1114** can analyze data collection **1134** to determine a number of actions **1126** to perform for aircraft **1110.** In this illustrative example, data collection **1134** can include additional data **1135** for overhead bin usage for other flights selected from at least one of aircraft **1110** or other aircraft.

In one example, a number of actions **1126** involves bin analyzer **1114** generating an indication **1125** of the number of open overhead bins **1121** in response to the number of open overhead bins **1121** being open during phase of flight **1120** in which the overhead bins are to be closed. In another example, this indication can be generated by bin analyzer **1114** during phase of flight **1120** in which overhead bins **1101** should be open but a number of overhead bins **1101** are closed.

The result of this process of generating indication **1125** is a practical application in which the flight crew can ensure that any open overhead bins are closed. In this example, phase of flight **1120** can be during a phase during which it is important to have overhead bins **1101** open or closed. For example, phase of flight **1120** can be a taxi-out or a final approach. In the taxi-out phase, flight cabin secure checks are performed including making sure overhead bins **1101** are closed. In the final approach phase, overhead bins **1101** also need to be checked and closed as part of performing a cabin secure check.

As another example, all of overhead bins **1101** can be open prior to boarding aircraft **1110** in a preboarding status for aircraft **1110.** In this case, the opening of overhead bins **1101** can be part of a preboarding procedure for this phase.

In one example, transducer system **1151** is present in aircraft **1110.** Indication **1125** can be generated using transducer system **1151,** which is configured to perform at least one of generating an acoustic signal, generating a graphical indicator, sending a text message, emitting a scent, or other type of indication.

Thus, with indication **1125,** crew members make sure that overhead bins **1101** are opened or closed as part of a procedure for a particular phase of flight. In this manner, indication **1125** provides for a practical application in opening and closing bins as part of a procedure for aircraft **1110.**

In another illustrative example, bin analyzer **1114** can analyze data collection **1134** to identify at least one of a maintenance, a boarding procedure, or a deboarding procedure for aircraft **1110.** For example, the number of actions **1126** can include maintenance of a number of the overhead bins **1101.** In another example, the number of actions **1126** can be creating a boarding procedure for aircraft **1110** that increases efficiencies of at least one of boarding passengers or overhead bin usage. As another example, the number of actions **1126** can be creating a deboarding procedure for aircraft **1110** that increases efficiencies in deboarding passengers in which the deboarding procedure takes into account how overhead bins **1101** are emptied.

Further, data collection **1134** can include overhead bin usage data **1171** for aircraft **1110** and other aircraft from randomized boarding and deboarding. This data and data collection **1134** can be analyzed using a machine learning model to identify patterns for determining boarding and deboarding procedures. These patterns can change based on aircraft model, a variant of a model, time of day, holiday, and other factors.

The illustration of aircraft management system **1100** in **Figure 11** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

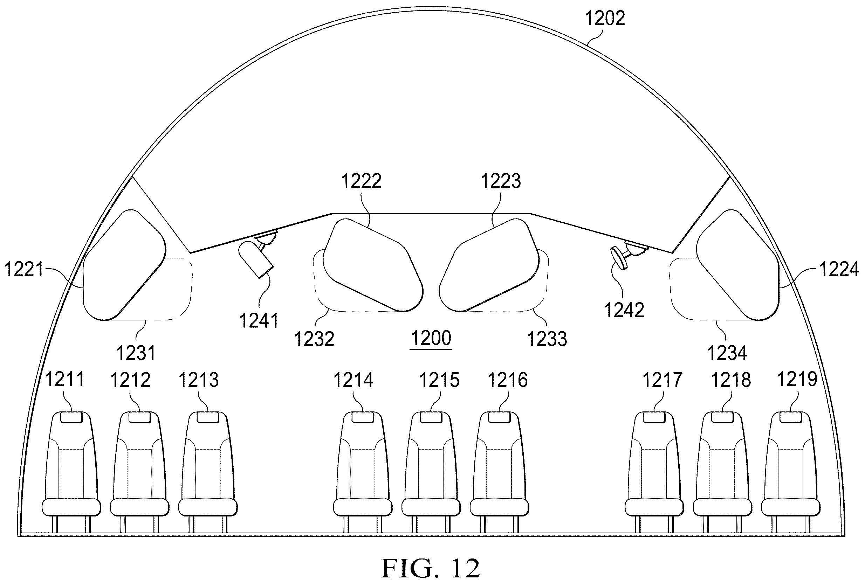

With reference next to **Figure 12****,** an illustration of a passenger cabin with overhead bins is depicted in accordance with an illustrative embodiment. In this illustrative example, a cross-sectional view of passenger cabin **1200** and aircraft **1202** is shown.

As depicted, passenger seat **1211,** passenger seat **1212,** passenger seat **1213,** passenger seat **1214,** passenger seat **1215,** passenger seat **1216,** passenger seat **1217,** passenger seat **1218,** and passenger seat **1219** are shown in this view of passenger cabin **1200.**

Further, overhead bin **1221,** overhead bin **1222,** overhead bin **1223,** and overhead bin **1224** are visible in this view. In this example, these bins are in the closed position.

As depicted, overhead bin **1221** has deployment zone **1231** and overhead bin **1222** has deployment zone **1232.** Overhead bin **1223** has deployment zone **1233,** and overhead bin **1224** has deployment zone **1234.** When the overhead bins are open, these overhead bins extend into their corresponding deployment zones. As depicted in this example, these deployment zones are illustrated in two dimensions but the actual deployment zones for these overhead bins are volumes.

In this example, camera **1241** and reflector **1242** are present within passenger cabin **1200.** Camera **1241** can generate image data for passenger cabin **1200** including deployment zone **1231** and deployment zone **1232.** Deployment zone **1233** and deployment zone **1234** are not visible to camera **1241.** Reflector **1242** is configured to reflect light from these deployment zones to camera **1241.** Thus, with camera **1241** and reflector **1242,** all four deployment zones can be monitored. In this manner, camera **1241** can generate image data for these deployment zones and send that image data to a bin analyzer for analysis and storage. For example, the bin analyzer can indicate when open overhead bins are present. This indication can be made during a phase of flight when the overhead bin should be closed. In another example, the indication can be enabled during the phase of flight when the overhead bins should be open but are in a closed position. Data on the opening and closing of overhead bins can be saved and analyzed to determine whether different patterns for passenger boarding and passenger deboarding may be made more efficient.

The illustration of aircraft **1202** with overhead bins is one example of monitoring overhead bins in an aircraft. This illustration is not meant to limit the manner in which other illustrative examples can be implemented. For example, a camera can be used in place of or in addition to reflector **1242** to provide monitoring for all of the deployment sentence. In other illustrative examples, other numbers of bins can be present. For example, two overhead bins can be present in a cross-sectional view rather than the four overhead bins in this illustrative example.

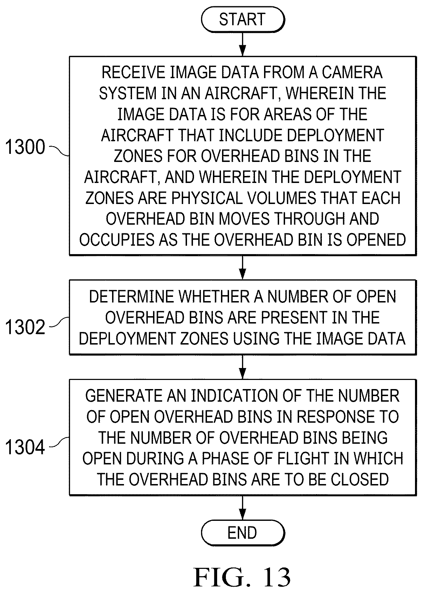

Turning next to **Figure 13****,** an illustration of a flowchart of a process for providing an autonomous warning is depicted in accordance with an illustrative embodiment. The process in **Figure 13** can be implemented in hardware, software, or both. When implemented in software, the process can take the form of program instructions that are run by one of more processor units located in one or more hardware devices in one or more computer systems. For example, the process can be implemented in bin analyzer **1114** in computer system **1112** in **Figure 11****.**

The process receives image data from a camera system in an aircraft, wherein the image data is for areas of the aircraft that include deployment zones for overhead bins in the aircraft, and wherein the deployment zones are physical volumes that each overhead bin moves through and occupies as the overhead bin is opened (operation **1300**). The process determines whether a number of open overhead bins are present in the deployment zones using the image data (operation **1302**).

The process generates an indication of the number of open overhead bins in response to the number of overhead bins being open during a phase of flight in which the overhead bins are to be closed (operation **1304).** The process terminates thereafter.

In these examples, similar indications can be made when overhead bins are closed that should be in an open position. For example, during the pre-boarding phase of flight, it may be desirable to have overhead bins in an open position to increase the ease at which passengers can place items into overhead bins for storage.

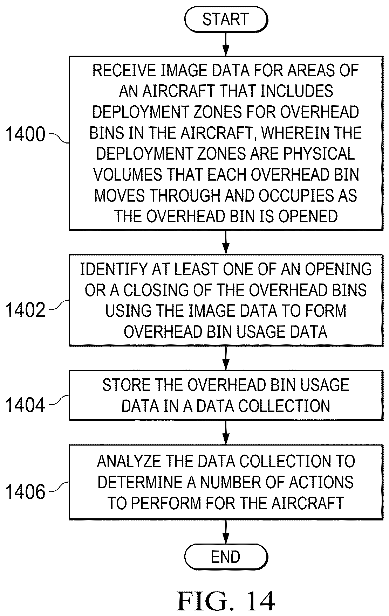

Turning next to **Figure 14****,** an illustration of a flowchart of a process for aircraft management is depicted in accordance with an illustrative embodiment. The process in **Figure 14** can be implemented in hardware, software, or both. When implemented in software, the process can take the form of program instructions that are run by one of more processor units located in one or more hardware devices in one or more computer systems. For example, the process can be implemented in bin analyzer **1114** in computer system **1112** in **Figure 11****.**

The process receives image data for areas of an aircraft that includes deployment zones for overhead bins in the aircraft, wherein the deployment zones are physical volumes that each overhead bin moves through and occupies as the overhead bin is opened (operation **1400**). The process identifies at least one of an opening or a closing of the overhead bins using the image data to form overhead bin usage data (operation **1402**).

The process stores the overhead bin usage data in a data collection (operation **1404**). The process analyzes the data collection to determine a number of actions to perform for the aircraft (operation **1406**). The process terminates thereafter.

Thus, these different processes enable a practical application of performing actions with respect to the aircraft and passenger boarding and deboarding. For example, a number of actions can be a maintenance of a number of the overhead bins. The analysis can indicate that an overhead bin may need maintenance because the bin has not opened or closed over some amount of time. This non-use indicates that the bin is not operating correctly and thus not used by passengers.

In another example, the number of actions can include creating a boarding procedure for the aircraft that increases efficiencies of at least one of boarding passengers or overhead bin usage. In yet another example, the number of actions can include creating a deboarding procedure for the aircraft that increases efficiencies in deboarding passengers in which the deboarding procedure takes into account how overhead bins are emptied. Thus, this analysis of data collected on overhead bin usage can be used in a practical application to perform actions with respect to at least one of the overhead bins, boarding an aircraft, or deboarding an aircraft.

Some features of the illustrative examples are described in the following clauses. These clauses are examples of features and are not intended to limit other illustrative examples.

The disclosure includes example embodiments in accordance with the following examples:
Example 1:
   An autonomous aircraft warning system comprising:
   a camera system in an aircraft;
   a swing zone in a flight deck defined by a sweep path within the flight deck for a flight deck door;
   a computer system; and
   an object detector in the computer system, wherein the object detector performs operations comprising:
      receiving image data from the camera system, wherein the image data is for the flight deck of the aircraft that includes the swing zone;
      determining, using the image data, whether an object is in the swing zone; and
      generating an autonomous warning in response to the object being within the swing zone.
Example 2:
   The autonomous aircraft warning system of example 1, wherein generating the autonomous warning comprises:
   generating a first autonomous warning in response to the object in the swing zone being a flight deck seat; and
   generating a second autonomous warning in response to the object in the swing zone being a person.
Example 3:
   An autonomous aircraft warning system comprising:
   a camera system in an aircraft;
   a computer system; and
   an object detector in the computer system, wherein the object detector performs operations comprising:
      receiving image data from the camera system, wherein the image data is for an area of the aircraft that includes a swing zone defined by a sweep path of a door in the aircraft;
      determining, using the image data, whether an object is in the swing zone; and
      generating an autonomous warning in response to the object being within the swing zone.
Example 4:
   The autonomous aircraft warning system of example 3 further comprising:
   a light redirection system configured to reflect light from the swing zone to the camera system such that the light received by the camera system matches an angle at which the light is received by the light redirection system to provide a clear image of the swing zone, wherein the light redirection system can be at least one of a mirror or a prism.
Example 5:
   The autonomous aircraft warning system of example 4, wherein the light redirection system is selected from at least one of a mirror, a concave mirror, or a prism.
Example 6:
   The autonomous aircraft warning system of example 3, wherein the swing zone is in a flight deck of the aircraft and further comprising:
   an optical port, wherein light from the swing zone is received by the camera system through the optical port in a structure separating the flight deck from another portion of the aircraft.
Example 7:
   The autonomous aircraft warning system of example 3 further comprising:
      a transducer system in the aircraft,
wherein said generating the autonomous warning in response to the object being within the swing zone comprises:
   activating the transducer system in response to the object being within the swing zone.
Example 8:
   The autonomous aircraft warning system of example 7, wherein the transducer system performs at least one of generating an acoustic signal, generating a graphical indicator, sending a text message, or emitting a scent.
Example 9:
   The autonomous aircraft warning system of example 3, further comprising:
   a visual feature located within the swing zone.
Example 10:
   The autonomous aircraft warning system of example 9, wherein the visual feature is configured such that an object in the swing zone obstructs at least a portion of the visual feature.
Example 11:
   The autonomous aircraft warning system of example 9, wherein the visual feature is selected from at least one of a pattern, a label, a symbol, a color cue, or a contour outline for the swing zone.
Example 12:
   The autonomous aircraft warning system of example 3, wherein the image data is selected from at least one of individual images or a video stream.
Example 13:
   The autonomous aircraft warning system of example 3, wherein the object is selected from the group consisting of a seat, a flight deck seat, a pilot seat, and a person.
Example 14:
   A method for providing an autonomous warning in an aircraft, the method comprising:
   receiving image data from a camera system in the aircraft, wherein the image data is for a flight deck of the aircraft that includes a swing zone, and wherein the swing zone in the flight deck is defined by a sweep path within the flight deck for a flight deck door;
   determining whether an object is in the swing zone using the image data; and
   generating the autonomous warning in response to the object being within the swing zone.
Example 15:
   A method for providing an autonomous warning in an aircraft, the method comprising:
   receiving image data from a camera system in the aircraft, wherein the image data is for an area of the aircraft that includes a swing zone;
   determining, using the image data, whether an object is in the swing zone using the image data; and
   generating the autonomous warning in response to the object being within the swing zone.
Example 16:
   The method of example 15, wherein a light redirection system reflects light from the swing zone to the camera system such that the light received by the camera system matches an angle at which the light is received by the light redirection system to provide a clear image of the swing zone.
Example 17:
   The method of example 15, wherein the swing zone is in a flight deck of the aircraft and wherein light from the swing zone is received by the camera system through an optical port in a structure separating the flight deck from another portion of the aircraft.
Example 18:
   The method of example 15, wherein said generating the autonomous warning comprises:
   activating a transducer system in response to the object being within the swing zone.
Example 19:
   The method of example 18, wherein the transducer system performs at least one of generating an acoustic signal, generating a graphical indicator, sending a text message, or emitting a scent.
Example 20:
   The method of example 15 wherein a visual feature located within the swing zone from which the camera system generates image data.
Example 21
   The method of example 20, wherein the object in the swing zone obstructs at least a portion of the visual feature.
Example 22:
   The method of example 20, wherein the visual feature is selected from at least one of a pattern, a label, a symbol, a color cue, or a contour outline for the swing zone.
Example 23:
   The method of example 15, wherein the image data is selected from at least one of individual images or a video stream.
Example 24:
   The method of example 15, wherein the object is selected from the group consisting of a seat, a flight deck seat, a pilot seat, and a person.
Example 25:
   A computer program product for providing an autonomous warning in an aircraft, the computer program product comprising:
   a set of one or more computer-readable storage media;
   program instructions stored on the set of one or more storage media to perform operations comprising:
   receiving image data from a camera system in the aircraft, wherein the image data is for a flight deck of the aircraft that includes a swing zone, and wherein the swing zone in the flight deck is defined by a sweep path within the flight deck for a flight deck door;
   determining, using the image data, whether an object is in the swing zone; and
   generating the autonomous warning alert in response to the object being within the swing zone.

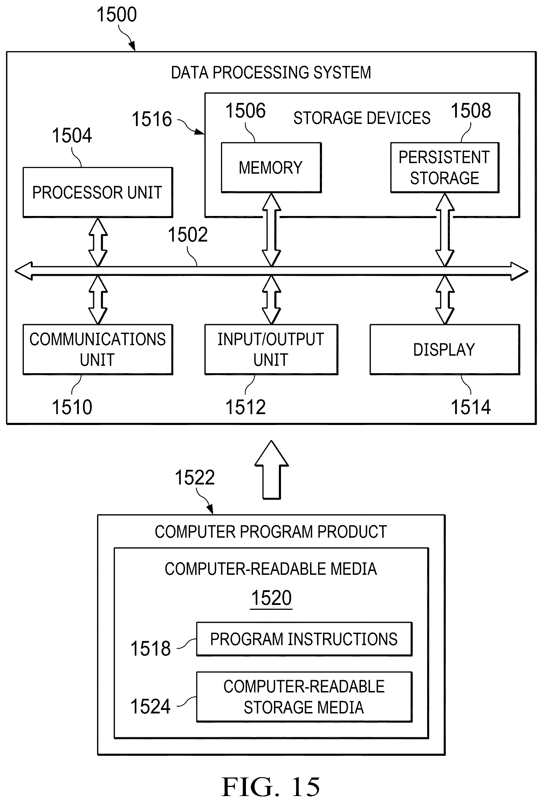

Turning now to **Figure 15****,** an illustration of a block diagram of a data processing system is depicted in accordance with an illustrative embodiment. Data processing system **1500** can be used to implement computer system **212** in **Figure 2** and computer system **1112** in **Figure 11****.** In this illustrative example, data processing system **1500** includes communications framework **1502,** which provides communications between processor unit **1504,** memory **1506,** persistent storage **1508,** communications unit **1510,** input/output (I/O) unit **1512,** and display **1514.** In this example, communications framework **1502** takes the form of a bus system.

Processor unit **1504** serves to execute instructions for software that can be loaded into memory **1506.** Processor unit **1504** includes one or more processors. For example, processor unit **1504** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1504** can be implemented using one or more heterogeneous processor systems in which a main processor is present with secondary processors on a single chip. As another illustrative example, processor unit **1504** can be a symmetric multi-processor system containing multiple processors of the same type on a single chip.

Memory **1506** and persistent storage **1508** are examples of storage devices **1516.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1516** may also be referred to as computer-readable storage devices in these illustrative examples. Memory **1506,** in these examples, can be, for example, a random-access memory or any other suitable volatile or non-volatile storage device. Persistent storage **1508** may take various forms, depending on the particular implementation.

For example, persistent storage **1508** may contain one or more components or devices. For example, persistent storage **1508** can be a hard drive, a solid-state drive (SSD), a flash memory, a rewritable optical disk, a rewritable magnetic tape, or some combination of the above. The media used by persistent storage **1508** also can be removable. For example, a removable hard drive can be used for persistent storage **1508.**

Communications unit **1510,** in these illustrative examples, provides for communications with other data processing systems or devices. In these illustrative examples, communications unit **1510** is a network interface card.

Input/output unit **1512** allows for input and output of data with other devices that can be connected to data processing system **1500.** For example, input/output unit **1512** may provide a connection for user input through at least one of a keyboard, a mouse, or some other suitable input device. Further, input/output unit **1512** may send output to a printer. Display **1514** provides a mechanism to display information to a user.

Instructions for at least one of the operating system, applications, or programs can be located in storage devices **1516,** which are in communication with processor unit **1504** through communications framework **1502.** The processes of the different embodiments can be performed by processor unit **1504** using computer-implemented instructions, which may be located in a memory, such as memory **1506.**

These instructions are referred to as program instructions, computer usable program instructions, or computer-readable program instructions that can be read and executed by a processor in processor unit **1504.** The program instructions in the different embodiments can be embodied on different physical or computer-readable storage media, such as memory **1506** or persistent storage **1508.**

Program instructions **1518** are located in a functional form on computer-readable media **1520** that is selectively removable and can be loaded onto or transferred to data processing system **1500** for execution by processor unit **1504.** Program instructions **1518** and computer-readable media **1520** form computer program product **1522** in these illustrative examples. In the illustrative example, computer-readable media **1520** is computer-readable storage media **1524.**

Computer-readable storage media **1524** is a physical or tangible storage device used to store program instructions **1518** rather than a medium that propagates or transmits program instructions **1518.** Computer-readable storage media **1524** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer-readable storage media **1524,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media.

Further, data can be moved at some occasional points in time during normal operations of a storage device. These normal operations include access, de-fragmentation or garbage collection. However, these operations do not render the storage device as transitory because the data is not transitory while the data is stored in the storage device.

Alternatively, program instructions **1518** can be transferred to data processing system **1500** using a computer-readable signal media. The computer-readable signal media are signals and can be, for example, a propagated data signal containing program instructions **1518.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1520"** can be singular or plural. For example, program instructions **1518** can be located in computer-readable media **1520** in the form of a single storage device or system. In another example, program instructions **1518** can be located in computer-readable media **1520** that is distributed in multiple data processing systems. In other words, some instructions in program instructions **1518** can be located in one data processing system while other instructions in program instructions **1518** can be located in one data processing system. For example, a portion of program instructions **1518** can be located in computer-readable media **1520** in a server computer while another portion of program instructions **1518** can be located in computer-readable media **1520** located in a set of client computers.

The different components illustrated for data processing system **1500** are not meant to provide architectural limitations to the manner in which different embodiments can be implemented. In some illustrative examples, one or more of the components may be incorporated in or otherwise form a portion of, another component. For example, memory **1506,** or portions thereof, may be incorporated in processor unit **1504** in some illustrative examples. The different illustrative embodiments can be implemented in a data processing system including components in addition to or in place of those illustrated for data processing system **1500.** Other components shown in **Figure 15** can be varied from the illustrative examples shown. The different embodiments can be implemented using any hardware device or system capable of running program instructions **1518.**

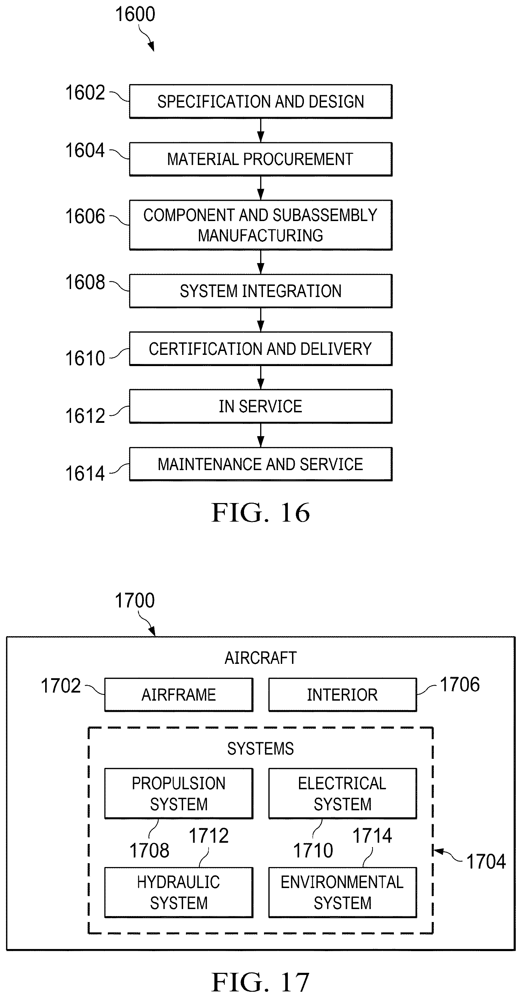

Illustrative embodiments of the disclosure may be described in the context of aircraft manufacturing and service method **1600** as shown in **Figure 16** and aircraft **1700** as shown in **Figure 17****.** Turning first to **Figure 16****,** an illustration of a block diagram of an aircraft manufacturing and service method is depicted in accordance with an illustrative embodiment. During pre-production, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** in **Figure 17** takes place. Thereafter, aircraft **1700** in **Figure 17** can go through certification and delivery **1610** in order to be placed in service **1612.** While in service **1612** by a customer, aircraft **1700** in **Figure 17** is scheduled for routine maintenance and service **1614,** which may include modification, reconfiguration, refurbishment, and other maintenance or service.

Each of the processes of aircraft manufacturing and service method **1600** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of a block diagram of an aircraft is depicted in which an illustrative embodiment may be implemented. In this example, aircraft **1700** is produced by aircraft manufacturing and service method **1600** in **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1600** in **Figure 16****.**

In one illustrative example, components or subassemblies produced in component and subassembly manufacturing **1606** in **Figure 16** can be fabricated or manufactured in a manner similar to components or subassemblies produced while aircraft **1700** is in service **1612** in **Figure 16****.** As yet another example, one or more apparatus embodiments, method embodiments, or a combination thereof can be utilized during production stages, such as component and subassembly manufacturing **1606** and system integration **1608** in **Figure 16****.** One or more apparatus embodiments, method embodiments, or a combination thereof may be utilized while aircraft **1700** is in service **1612,** during maintenance and service **1614** in **Figure 16****,** or both. The use of a number of the different illustrative embodiments may substantially expedite the assembly of aircraft **1700,** reduce the cost of aircraft **1700,** or both expedite the assembly of aircraft **1700** and reduce the cost of aircraft **1700.**

For example, an autonomous aircraft warning system **202** in **Figure 2** can be implemented during component and subassembly manufacturing **1606.** In another example, the system can be implemented in aircraft **1700** during maintenance and service **1614** in which at least one of modification, reconfiguration, refurbishment, and other maintenance or service are performed. In a similar fashion, aircraft management system **1100** can also be implemented during one of these stages. Further, these two types of systems can operate during in service **1612** of aircraft **1700.**

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An aircraft management system (1100) comprising:
a computer system (1112); and
a bin analyzer (1114) in the computer system, wherein the bin analyzer is configured to:
receive image data (1132), wherein the image data is for areas of the aircraft (1110, 1202) that include deployment zones (1102) for overhead bins (151, 1101) in the aircraft, and wherein the deployment zones are physical volumes that each overhead bin moves through and occupies as the overhead bin is opened;
identify at least one of an opening or a closing of the overhead bins using the image data to form overhead bin usage data (1171);
store the overhead bin usage data (1171) in a data collection (1134); and
analyzing the data collection to determine a number of actions (1126) to perform for the aircraft.

2. The aircraft management system (1100) of claim 1, further comprising:
a camera system (1130) in the aircraft (1110, 1202) configured to generate image data and to transmit image data to the bin analyzer (1114).

3. The aircraft management system (1100) of claim 1 or 2, wherein the bin analyzer (1114) comprises an object detection module (1170) configured to determine whether an overhead bin (1101) is located in deployment zones (1102) using image data (1132).

4. The aircraft management system (1100) of any of claims 1 to 3, wherein the bin analyzer (1114) is configured to
determine whether a number of open overhead bins (1121) are present in the deployment zones (1102) using the image data (1132); and
generate an indication (1125) of the number of open overhead bins (1121) in response to the number of open overhead bins (1121) being open during a phase of flight (1120) in which the overhead bins (151, 1101) are to be closed.

5. The aircraft management system (1100) of any of claims 1 to 4, wherein:
the data collection (1134) includes additional data (1135) for overhead bin (1104, 1221, 1222, 1223, 1224) usage for other flights selected from one of at least one of the aircraft (1110, 1202) or other aircraft (1110, 1202); and
the bin analyzer (1114) further performs operations comprising:
analyzing the data collection (1134) to identify at least one of a maintenance, a boarding procedure, or a deboarding procedure for the aircraft (1110, 1202).

6. The aircraft management system (1100) of any of claims 1 to 5, further comprising:
a light redirection system (1133) configured to reflect light from a number of the deployment zones (1102) in which the light is redirected to the camera system (1130) such that an angle of the light received by the camera system (1130) matches the angle at which the light is received by the light redirection system (1133) to provide a clear image of a number of the deployment zones (1102).

7. The aircraft management system (1100) of any of claims 1 to 6, further comprising:
an optical port (1155), wherein light from a number of deployment zones (1102) is received by the camera system (1130) through the optical port (1155) in a structure separating one area of the aircraft (1110, 1202) from another area of the aircraft (1110, 1202).

8. The aircraft management system (1100) of any of claims 1 to 7, further comprising:
a number of visual features (1160) located in the deployment zones (1102), wherein an overhead bin (1104, 1221, 1222, 1223, 1224) in an open position obstructs at least a portion of the number of visual features (1160).

9. The aircraft management system (1100) of claim 6, wherein the light redirection system (1133) is selected from at least one of a mirror, a concave mirror, or a prism.

10. The aircraft management system (1100) of any of claims 4 to 9, further comprising:
a transducer system (1151) in the aircraft (1110, 1202) configured to be activated by the indication (1125).

11. The aircraft management system (1100) of claim 10, wherein the transducer system (1151) is configured to perform at least one of generating an acoustic signal, generating a graphical indicator, sending a text message, or emitting a scent.

12. The aircraft management system (1100) of claim 8, wherein the number of visual features (1160) is selected from at least one of a pattern, a label, a symbol, a color cue, or a contour outline for the deployment zone.

13. The aircraft management system (1100) of any of claims 1 to 12, wherein the image data (1132) is selected from at least one of individual images or a video stream.

14. A method for aircraft (1110, 1202) management, the method comprising:
Receiving (1400) image data (1132) for areas of an aircraft (1110, 1202) that include deployment zones (1102) for overhead bins (151, 1101) in the aircraft (1110, 1202), wherein the deployment zones (1102) are physical volumes that each overhead bin (1104, 1221, 1222, 1223, 1224) moves through and occupies as the overhead bin (1104, 1221, 1222, 1223, 1224) is opened;
identifying (1402) at least one of an opening or a closing of the overhead bins (151, 1101) using the image data (1132) to form overhead bin usage data (1171);
storing (1404) the overhead bin usage data (1171) in a data collection (1134); and
analyzing (1406) the data collection (1134) to determine a number of actions (1126) to perform for the aircraft (1110, 1202).

15. The method for opening overhead bin (1104, 1221, 1222, 1223, 1224) indication (1125), the method further comprising:
determining (1302) whether a number of open overhead bins (1121) (151, 1101) are present in the deployment zones (1102) using the image data (1132); and
generating (1304) an indication (1125) of the number of open overhead bins (1121) (151, 1101) in response to the number of overhead bins (151, 1101) being open during a phase of flight (1120) in which the overhead bins (151, 1101) are to be closed.
